# EUROPEAN PATENT APPLICATION

(11) **EP 4 836 073 A1**
(43) Date of publication of application: **04.11.2026**
(21) Application number: 26173919.7
(22) Date of filing: 22.04.2026
(51) Int. Cl.: H01M 10/42, G06F 21/88, G08B 13/00, H01M 10/48

(54) **ELECTRIC BATTERY WITH REAL-TIME CLOCK**

(30) Priority: 30.04.2025 IT 202500009615
(71) Applicant: Emak S.p.A., 42011 Bagnolo in Piano (Reggio Emilia) (IT)
(72) Inventor: BARBOLINI, Gianluca, 41122 Modena (IT)
(74) Representative: Ing. C. Corradini & C. S.R.L.

(57) **Abstract**

An electrical device (100) is described comprising: an electrical load (105), at least one electrical battery (120) suitable for powering said electrical load (105) and comprising: a battery body (135), at least one positive electrical pole (125) and at least one negative electrical pole (130) positioned on the battery body (135), so that they are both exposed to the outside, at least one electrochemical cell enclosed inside the battery body (135) and suitable for converting chemical energy into electrical energy, creating a difference in electrical voltage between the positive electrical pole (125) and the negative electrical pole (130), an electronic real time counting circuit (145), which is placed inside the battery body (135) and is suitable for generating a signal indicative of the real time, and a connection system (150) suitable for transmitting the signal generated by said electronic real time counting circuit to the outside of the battery body (135). (145). according to any of the preceding claims, and a central electronic unit (155) for controlling the electrical load (105), which is connected to said electronic real-time counting circuit (145) via the connection system (150).

## Description

### Technical Field

The present invention relates to an electric battery and an electrical device comprising said battery.

An electrical device can be any electrically operated device, i.e. a device that requires a power supply to operate, such as a power tool.

By way of non-limiting example, the invention may relate to power tools for performing agricultural and/or gardening work, such as motor hoes, motor cultivators, motor mowers, lawn mowers, blowers, chain saws, hedge trimmers and the like.

### Prior art

In order to reduce environmental impact, the above-mentioned devices, including the aforementioned agricultural and/or gardening power tools, are increasingly being driven by battery-powered (electric) motors.

This battery is usually removable so that it can be recharged by means of an external charger, while the device can continue to function with a replacement battery.

A drawback of these devices is that their control apparatus is normally unable to count the passage of time when the device is switched off.

In order to tackle this drawback, it has been hypothesised to equip the aforementioned electrical devices with a real-time clock (RTC), similar to what happens in modern personal computers.

However, a real-time clock (RTC) requires a constant power supply.

This power cannot be supplied by the device's battery, since each time it is removed, e.g. to be replaced, it would cause the real-time clock (RTC)to stop.

Therefore, as in personal computers, the real-time clock (RTC) should be powered by a special autonomous battery, commonly known as a buffer battery, which should be installed in the electrical device in addition to the main battery.

Although this buffer battery can have a relatively long service life, it too would have to be replaced periodically, thus introducing not only a complication in terms of construction, but also an additional inconvenience for users.

### Disclosure of the invention

An object of the present invention is to overcome or at least limit the mentioned drawback of the prior art, within the context of a simple and rational solution and at a relatively reduced cost.

These and other objects are achieved thanks to the characteristics of the invention as set forth in the independent claims. The dependent claims outline preferred and/or particularly advantageous aspects of the invention which however are not strictly required for the implementation thereof.

In particular, one embodiment of the invention makes available an electric battery, preferably capable of serving as the main (removable) electric battery of an electrical device, which comprises:
- a battery body,
- at least one positive and at least one negative electric pole positioned on the battery body, so that both are exposed to the outside,
- at least one electrochemical cell, e.g. a lithium-ion cell, enclosed within the battery body and configured to convert chemical energy into electrical energy by creating an electrical voltage difference between the positive and negative electric poles,
- an electronic real-time clock (RTC) circuit, located inside the battery body and configured to generate a signal indicative of real time, and
- a connection system configured to transmit the signal generated by said electronic real-time clock circuit to the outside of the battery body.

Thanks to this solution, in addition to supplying power to the electrical device with which it is associated, the electric battery will be able to provide its control circuits with up-to-date real time information (e.g. year, month, day, hour, minutes and seconds), without the electrical device having to contain a dedicated buffer battery.

Even when the electric battery is separated from the electrical device, in fact, the real-time clock (RTC) continues to count the real time, the updated value of which can therefore be transmitted to the control circuits of the electrical device as soon as the battery is remounted.

According to a preferred embodiment of the present invention, the electronic real-time clock (RTC) circuit can be powered by the electrochemical cell of the electric battery.

Thanks to this solution, the real-time clock (RTC) has no need for a stand-alone buffer battery, preserving the simplicity of the overall battery design.

However, it cannot be ruled out that, in other embodiments, the electric battery may also comprise an (electric) buffer battery, distinct from the electrochemical cell that applies the voltage difference at the poles, which is configured to power the electronic real-time clock circuit and, for example, may be housed inside the battery body.

Another preferred aspect of the invention is that the electrochemical cell of the electric battery can be a rechargeable electrochemical cell, also called a secondary electrolytic cell.

In this way, the electric battery and its real-time clock (RTC) can be reused several times. According to another aspect of the invention, the connection system, for transmitting the signal generated by the real-time clock (RTC) to the outside world, may comprise a data port positioned on the battery body, which is connected to the electronic real-time clock circuit and can be connected to external electronic circuits, for example via a communication bus (e.g. CAN-bus or Serial- Bus).

This data port, which can be separated from the electric poles or possibly integrated into them, enables particularly secure, stable and fast signal transmission.

However, it is not excluded that, in some embodiments, the connection system may be wireless.

Another embodiment of the present invention makes available an electrical device, for example a power tool, preferably for agricultural and/or gardening work, such as a motor hoe, motor cultivator, motor mower, lawn mower, blower, chain saw, hedge trimmer or the like, which comprises:
- an electrical load, such as an electric motor,
- at least one electric battery as outlined above, preferably installed in the electrical device in a removable and/or replaceable manner, which is configured to power said electrical load, possibly via an inverter or other intermediate apparatus, and
- a central electronic control unit of the electrical load, which is connected with said electronic real-time clock (RTC) circuit, via the connection system, e.g. via the data port and the communication bus.

This embodiment of the invention substantially achieves the same advantages as those explained with reference to the electric battery as such, in particular, it allows the central electronic unit of the electrical device to know the real time, without the need to equip the electrical device with its own buffer battery.

The real-time information provided by the real-time clock (RTC) of the battery can be useful for multiple purposes.

In particular, an embodiment of the present invention provides that the central electronic unit can be configured to repeatedly acquire and store, for example in a non-volatile memory unit of the electrical device, a value of at least one (preferably the same) operating parameter of at least one component of the device.

More preferably, the central electronic unit can be configured to repeatedly acquire and store a value of a plurality of operating parameters of one or more device components.

These device components may include the electric battery and/or any other electrical/electronic components, such as circuits or electronic boards, present in the electrical device, e.g. in the motor hoe, motor cultivator, motor mower, lawn mower, blower, chain saw, hedge trimmer, etc.

In the case of the electric battery, the operating parameter(s) whose value(s) is (are) to be measured and stored can be selected from, for example, voltage, current, state of charge and temperature.

In this context, the central electronic unit can be configured to acquire each value of each operating parameter, with timing based on the real time counted by the electronic real-time clock circuit that is integrated into the battery.

For example, the central electronic unit can be configured to acquire the values of each operating parameter periodically, with the period calculated on the basis of the real time counted by said electronic real-time clock circuit (e.g. once a month).

In this way, it is advantageously possible to acquire and store the values of the operating parameter(s) with precise timing, e.g. with a precise time frequency.

This is the case even if, between one acquisition and the next, the electric battery should be removed, since through the real-time clock (RTC) built into it, the central electronic unit, when powered, is always able to know the real time.

Also in this context, the central electronic unit can be configured to acquire from the electronic real-time clock circuit the real time value at the instant of acquisition of each value of each operating parameter, and to store said real time value by associating it with the corresponding value of the operating parameter.

Thanks to this solution, it is advantageously possible to keep track of changes in the values of the operating parameters of the battery and/or other components of the electrical device over time.

According to a preferred aspect of the invention, the central electronic unit may be configured to store a plurality of values of each operating parameter, acquired at different times, for example the last N values acquired in chronological order.

In this way, it is advantageously possible to create, within the device, a database of the values assumed by the various operating parameters over a relatively long period and, in general, longer than the individual periods between two consecutive acquisitions.

For example, for each device component (e.g. battery and/or other), the central electronic unit can store an n-tuple of values (e.g. fourteen or fifteen values) of each operating parameter, acquired at as many different and preferably successive instants of time.

Another aspect of the invention provides that the electrical device may further comprise at least one communication module by means of which the central electronic unit is connectable to a software application (e.g., App or Web-App) running on an external electronic device, for example a smartphone, tablet computer, personal computer or any other portable or stationary electronic device.

Preferably, this communication module can be of the wireless type (e.g. Bluetooth) but it is not excluded that, in other embodiments, it can be of the wired type.

In particular, the central electronic unit can only be configured to connect to the software application following an authorisation procedure that may require, for example, a user identification phase (log-in) to be carried out via the software application itself.

In this context, the central electronic unit can be configured to transmit the acquired and stored values of each operating parameter to the software application.

Thanks to this solution, when the central electronic unit of the electrical device, e.g. of the power tool, is connected with the software application executed by the external electronic device, e.g. from a smartphone, it is advantageously possible to carry out data logging, which allows the software application to acquire and possibly display, e.g. via a display of the external electronic device, all stored values of the operating parameters of the various components, which can be appropriately used for control, diagnostics or other purposes.

Since, as already mentioned, the central electronic unit can be configured to store numerous values of each operating parameter over an extended period of time, this data logging procedure makes it possible to know the time course of each operating parameter even if, during the acquisition period, the electrical device was never connected to the external electronic device.

According to another aspect of the invention, the central electronic unit can be configured to count, by means of the electronic real-time clock circuit, a period of time during which it is disconnected from the software application, and to prevent the operation of the electrical device, if said period of time exceeds a predetermined threshold value.

This provides an advantageous anti-theft function, as an electrical device that is stolen from its rightful owner and is therefore unable to connect with the software application on the external electronic device will be blocked and rendered unusable.

This anti-theft function can optionally be enabled and disabled via the software application (App), so that its use is at the user's discretion.

### Brief description of the drawings

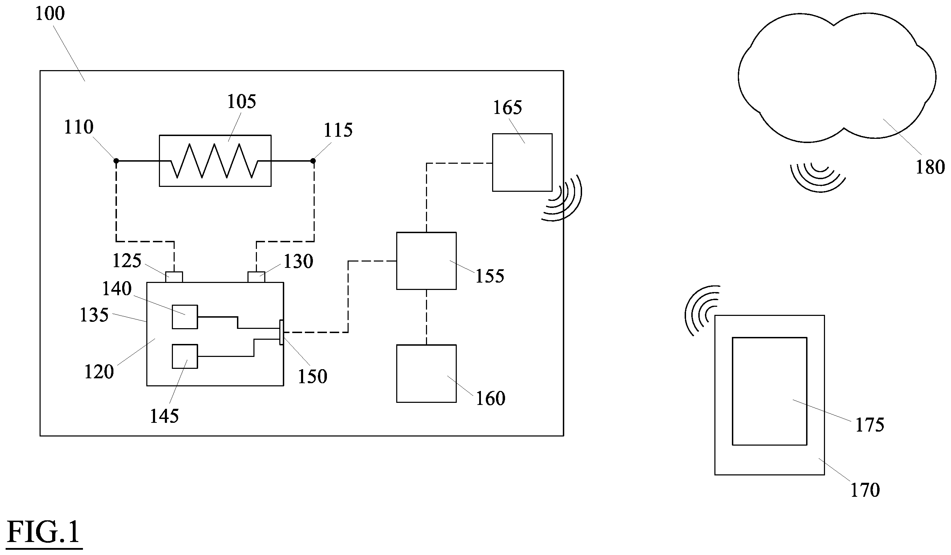

Further characteristics and advantages of the invention will be apparent upon reading the hereinafter description provided for exemplary and non-limiting purposes, with the aid of Figure 1 shown in the enclosed table, which shows a device provided with an electric battery according to an embodiment of the present invention.

### Detailed description

In the following discussion, it is described an electrical device 100, represented only schematically in the figures.

The electrical device 100 can be a power tool, an electric vehicle or, in general, any device, preferably of the mobile or portable type, that requires a power source to operate.

By way of non-limiting example, the electrical device 100 may be a device designed to perform agricultural and/or gardening work, for example a motor hoe, motor cultivator, motor mower, lawn mower, blower, chain saw, hedge trimmer or the like.

In general, the electrical device 100 comprises an electrical load 105 that must be supplied electrically.

The electrical load 105 is any electrical/electronic apparatus which, when electrically supplied, is able to perform a function.

For example, an electrical load 105 may comprise an electric motor configured to transform the electrical power source into mechanical power configured to move a mechanical apparatus, e.g. one or more driving wheels of a working tool (e.g. a cutting tool) or a mechanism.

However, it must not be ruled out that the electrical load 105 may also (or alternatively) comprise electronic apparatuses and/or transducers of electrical power into thermal power (e.g. resistors or other heating devices), light power (e.g. bulbs) or of any other type.

In general, the electrical load 105 can be considered as an electrical component which, as shown in the figures, can be represented by the symbol of a resistor and which, regardless of this, comprises a first terminal 110 and a second terminal 115, between which an electrical voltage difference, direct or alternating, must be applied.

The electrical device 100 also comprises at least one electric battery 120, which is configured to power the electrical load 105, i.e. to supply it with the electrical voltage required for its operation.

Depending on the type of electrical load 105, the power source from the electric battery 120 may occur by one or more intermediate electrical/electronic devices (not shown).

For example, in the exemplary but non-limiting case in which the electrical load 105 would comprise an electric motor or other device to be supplied with alternating current, the electric battery 120 could supply the electrical load 105 via an alternator configured to transform the direct electric voltage supplied by the electric battery 120 into an alternating electric voltage useful for supplying the electrical load 105.

The electric battery 120 may generically comprise a first pole or positive pole 125, indicated by the symbol "+", a second pole or negative pole 130, indicated by the symbol "-", and at least one electrochemical cell (e.g. galvanic cell or voltaic cell), which is configured to create an electrical voltage difference between the positive pole 125, which is the one with the higher voltage, and the negative pole 130, which is the one with the lower voltage. An electrochemical cell comprises, in general, appropriate chemical elements to carry out an electrochemical reaction that converts the chemical energy stored in said chemical elements into electrical energy, specifically the aforementioned electrical voltage difference.

The electrochemical cell, i.e. these chemical elements, may be enclosed in an outer body (or casing) 135 of the electric battery 120, also referred to as the battery body, for example made of a polymer material, while the positive and negative poles 125 and 130, which may be made in the form of electrical contacts of conductive material (e.g. metal), may be positioned on the battery body 135 so as to be exposed to the outside and thus accessible for electrical connection.

The electric battery 120 is preferably of the chargeable type, i.e. they may comprise (or consist of) one or more so-called secondary electrochemical cells.

In this type of electrochemical cell, the electrochemical reaction outlined above is reversible, whereby, by applying a voltage difference between the positive pole 125 and the negative pole 130, it is possible to store the electrical energy supplied in the form of chemical energy in the chemical elements that form the electrochemical cell and that are contained in the battery body 135.

Naturally, in order to supply the electrical load 105, the positive terminal 125 and the negative terminal 130 of the electric battery 120 are electrically connectable with the first terminal 110 and the second terminal 115 of the electrical load 105, respectively.

The electric battery 120 can further comprise an electrical measuring circuit 140.

This electrical measuring circuit 140 is generally designed to detect one or more operating parameters of the electric battery 120, and can for example be installed/integrated into the battery body 135.

In the context of the present discussion, the operating parameters of the electric battery 120 may include, for example and not necessarily exclusively or limitatively, one or more of the following parameters: the electric voltage between the electric poles 125 and 130 of the electric battery 120, the electric current flowing through the electric battery 120, the state of charge of the electric battery 120, the temperature of the electric battery 120.

The electric battery 120 may further comprise an electronic real-time clock circuit 145, namely a so-called real-time clock (RTC), which may be located within the battery body 135 and is configured to count real time (e.g., year, month, day, hour, minute and second) and to generate a signal indicative of said real time.

Preferably, the electronic real-time clock circuit 145 can be configured to count real time expressed in UTC (Coordinated Universal Time).

This electronic real-time clock circuit 145, which may comprise an integrated circuit processor (e.g., chip), may be powered by the electrochemical cell of the electric battery 120 with which it is associated, or by a dedicated (electric) buffer battery housed in the electric battery 120 itself, e.g., in the battery body 135.

The electric buffer battery could therefore be distinct from the electrolytic cell and may not be connected to the electric poles 125 and 130 of the electric battery 120.

In any event, the electric battery 120 may further comprise a connection system, which is configured to transmit, to the outside of the battery body 135, the signal generated by the electronic real-time clock circuit 145.

This connection system may comprise a data port 150 located on the battery body 135, to be accessible from the outside, which is connected with the electronic real-time clock circuit 145 and can be connected to external electronic circuits, e.g. via an appropriate communication bus (e.g. CAN-bus or Serial-Bus).

However, it is not excluded that, in some embodiments, the communication system may be wireless.

The electrical device 100 may therefore comprise a central electronic unit 155, e.g. microprocessor-based, which is located externally to the electric battery 120 (i.e. to the battery body 135) and is connected to the electronic real-time clock circuit 145, via the communication system, e.g. the data port 150.

This central electronic unit 155 can also be connected with the electrical measuring circuit 140, e.g. via one or more communication buses (e.g. CAN-bus or Serial-bus), so that the operating parameters of the electric battery 120 can be received from it.

For example, the connection to the electrical measuring circuit 140 can be made via the same data port 150 to which the electronic real-time clock circuit 145 is also connected.

The central electronic unit 155 can be configured to control the operation of the electrical load 105.

Obviously, the control of the operation of the electrical load 105, operated by the central electronic unit 155, depends to a large extent on the type of electrical load 105.

For example, in case the electrical load 105 comprises an electric motor, the control may comprise the switching on and/or off and/or the adjustment of the speed of said electric motor.

In any case, the central electronic unit 155 can be configured to perform said control on the basis of (e.g. as a function of, using, taking into account or responding to) multiple inputs.

These inputs may comprise command signals coming from a command panel, usually referred to as a dashboard, which may be connected to the central electronic unit 155 and may comprise manual commands available to users, such a command for switching on and/or adjusting the motor speed (throttle).

In addition or alternatively, the inputs can naturally include the operating parameters of the electric battery 120 coming from the electrical measuring circuit 140.

The central electronic unit 155 can also be connected to a communication interface, usually denoted HMI (*Human Machine Interface*), via which the central electronic unit 155 can provide users with useful information from the electrical device 100 (e.g. battery charge status) and operating states.

In order for the central electronic unit 155 to function, it needs to be powered electrically, and this power supply can be provided, for example, by the same electric battery 120 that also powers the electrical load 105.

The central electronic unit 155 may include or be connected with a non-volatile memory unit 160, e.g. but not exclusively EPROM, EEPROM or Flash memory, and may be configured to store in said non-volatile memory unit 160 one or more operating parameters of the electric battery 120 and/or one or more further electrical/electronic components (e.g. boards and/or electronic circuits) of the electrical device 100.

For example, the non-volatile memory unit 160 may comprise an n-tuple of memory sectors (e.g., fifteen) allocated to the storage of the operating parameters of the electric battery 120, and/or an n-tuple of memory sectors (e.g., fourteen) allocated to the storage of the operating parameters of each of the other electrical/electronic components of the electrical device 100, if any.

The operating parameters of the electric battery 120 and/or those of any other components can be stored in each memory sector in the form of an electronic image, e.g. a screenshot, in which the values of the operating parameters acquired at the same instant of time are represented, where this instant of time can be determined by the electronic real-time clock circuit 145.

In particular, the central electronic unit 155 can be configured to acquire each value of each operating parameter of the electric battery 120, with timing based on the real time counted by the electronic real-time clock circuit 145.

For example, the central electronic unit 155 can be configured to acquire the values of the operating parameters of the electric battery 120 in a periodic manner, with the period calculated on the basis of the real time counted by said electronic real-time clock circuit 145 (e.g. once a month).

This is the case even if, between one acquisition and the next, the electric battery 120 should be removed, since via the real-time clock (RTC) 145, the central electronic unit 155 is always able to know the real time when the electric battery 120 is reassembled or when it is replaced by another equivalent one.

After their acquisition, the values of the operating parameters of the electric battery 120 can be stored in the non-volatile memory unit 160, for example in one of the memory segments reserved for the electric battery 120 itself and, as anticipated, for example in the form of a digital image.

In this way, the central electronic unit 155 is able to store an n-tuple of values of each operating parameter of the electric battery 120, for example an n-tuple of digital images (screenshots), equal to the number of memory sectors dedicated to the electric battery 120 itself, preferably the last N values acquired in chronological order.

In this way, it is advantageously possible to create, within the device, a database of the values assumed by the various operating parameters over a relatively long period and, in general, longer than the individual periods between two consecutive acquisitions.

Optionally, the central electronic unit 155 may be configured to also acquire from the electronic real-time clock circuit 145 the real times (e.g., date and time) at which the values of the aforementioned operating parameters were acquired, and to store within the non-volatile memory unit 160 (i.e., the database) each acquired real time value, associating it with the corresponding values of the operating parameters.

Thanks to this solution, it is advantageously possible to understand the variation in the values of the operating parameters of the electric battery 120 over time.

Although an explanatory case of the operating parameters of the electric battery 120 has been described, the central electronic unit 155 can be configured to acquire and store the operating parameter values of any other electric/electronic component of the electrical device 100 in the same manner.

The electrical device 100 may further comprise a wireless communication module 165, e.g. of the Bluetooth type, which may be connected to the central electronic unit 155 so as to enable the latter to communicate with other electronic devices in wireless mode.

In particular, via the wireless communication module 165, the central electronic unit 155 can be connected with an external electronic device 170, for example with a smartphone, tablet computer, personal computer or any other electronic device, preferably but not necessarily portable.

In other embodiments, the connection between the central electronic unit 155 and the external electronic device 170 could be realised via a wired communication system.

In any case, by exploiting this connection, the central electronic unit 155 of the electrical device 100 can be configured to connect to a software application (e.g. App or Web-App) 175 that is executed by the external electronic device 170.

In particular, the central electronic unit 155 can only be configured to connect to the software application 175 following an enabling procedure that may require, for example, a user identification process (log-in) to be performed on the software application 175 itself. For example, the electrical device 100 and the software application 175 running on the external electronic device 170 may be part of a (computer) system, which may possibly also include a remote server 180 (possibly cloud-based) to which the software application 175 may connect, for example via the internet.

A database can be implemented in the remote server 180 in which an identification code of the electrical device 100, or of each electrical device 100 in a series of devices, is associated with one or more user profiles enabled to use that electrical device 100.

By means of the external electronic device 170, the software application 175 can be configured to acquire the identification code of the electrical device 100 and to acquire, for example, the access credentials of a user intending to use it.

The identification code of the electrical device 100 can be transmitted directly from the central electronic unit 155, while the access credentials can be provided by the user via an interface of the external electronic device 170.

This data can then be transmitted to the remote server 180 and, if the user profile associated with the access credentials provided corresponds to one of the users authorised to use the electrical device 100, the central electronic unit 155 of the electrical device 100 can be enabled to connect with the software application 175.

Once the connection has been established, the central electronic unit 155 can be configured to transmit to the software application 175 the acquired values of the operating parameters of the electric battery 120 and/or one or more of the other possible electrical/electronic components of the electrical device 100, for example the values stored in the non-volatile memory unit 160.

In this way, it is advantageously possible to carry out data logging, which allows the software application 175 to acquire and possibly display, e.g. via a display of the external electronic device 170, all stored values of the operating parameters of the various components of the electrical device 100, which can be appropriately used for control, diagnostics or other purposes.

Since the central electronic unit 155 can be configured to store numerous values of each operating parameter in the non-volatile memory unit 160 over an extended period of time, this data logging makes it possible to know the time course of each operating parameter even if, during the acquisition period, the electrical device 100 was never connected to (any) external electronic device 170.

As an alternative or in addition to the data logging procedure, the central electronic unit 155 of the electrical device 100 can be configured to perform an anti-theft procedure.

This anti-theft procedure can be activated, e.g. via the software application 175, when the latter is (validly) connected to the central electronic unit 155, so that the user who has made the connection can use it in a discretionary manner.

The anti-theft procedure envisages that the central electronic unit 155 is configured to count, by means of the electronic real-time clock circuit 145, a (continuous) period of time during which it (i.e. the central electronic unit 155) remains disconnected from the software application 175.

If this time period exceeds a predetermined threshold value, e.g. a certain number of days, the central electronic unit 155 can be configured to prevent operation of the electrical device 100.

For example, the central electronic unit 155 may be configured to store in the non-volatile memory unit 160 the real time (e.g., at least the date) when the (last) disconnection of the central electronic unit 155 from the software application 175 occurs.

Thereafter, each time the electrical device 100 is subsequently used/ switched on, the central electronic unit 155 can be configured to acquire, from the electronic real-time clock circuit 145, the real time at that instant and to compare it with the stored time.

If the difference between these two actual times is greater than the predetermined threshold, e.g. the predetermined number of days, the central electronic unit 155 can be configured to block the electrical device 100, i.e. to prevent it from operating, e.g. by preventing the electric battery 120 from supplying the electrical load 105.

Of course, if in the meantime, the central electronic unit 155 is (validly) reconnected to the software application 175 or then disconnected, the stored real time value will be updated.

This ensures that an electrical device 100 cannot be freely used by unauthorised users, e.g. by persons who have taken it away from its rightful owner.

In fact, if the electrical device 100 were to be taken away from its rightful owner and, as a result, were unable to (validly) connect with the software application 175, the electrical device 100 would be blocked and rendered unusable.

Once locked, the electrical device 100 can only be unlocked by establishing a new (valid) connection between the central electronic unit 155 and the software application 175.

In particular, the electrical device 100 can only be unlocked if this new connection is established by the same user who initially activated the anti-theft procedure.

Similarly, once activated, the anti-theft procedure can be subsequently deactivated, for example still by means of the software application 175, but only if the connection between the software application 175 and the central electronic unit 155 of the electrical device 100 is established by the same user who had initially activated it.

For example, when a user activates the anti-theft procedure, all other users authorised to use the electrical device 100 are at least temporarily excluded, and only the user who activated the anti-theft procedure will be able to remove this option and unlock the electrical device 100 if locked.

Obviously, a person skilled in the art may make several technical-applicative modifications to the above description, without departing from the scope of the invention as hereinafter claimed.

## Claims

1. An electrical device (100) comprising:
- an electrical load (105),
- at least one electric battery (120) configured to power said electrical load (105), the electric battery (120) comprising:
∘ a battery body (135),
∘ at least one positive electric pole (125) and at least one negative electric pole (130) positioned on the battery body (135) so that both are exposed to the outside,
∘ at least one electrochemical cell enclosed within the battery body (135) and configured to convert chemical energy into electrical energy by creating an electrical voltage difference between the positive electric pole (125) and the negative electric pole (130),
∘ an electronic real-time clock circuit (145) located inside the battery body (135) and configured to generate a signal indicative of real time, and
∘ a connection system (150) configured to transmit to the outside of the battery body (135) the signal generated by said electronic real-time clock circuit (145),
- a central electronic unit (155) for controlling the electrical load (105), the central electronic unit (155) being connected to said electronic real-time clock circuit (145) via the connection system (150).

2. The electrical device (100) according to claim 1, wherein the central electronic unit (155) is configured to repeatedly acquire and store a value of at least one operating parameter of the electric battery (120) and/or of at least one other electrical/electronic component of the electrical device (100).

3. The electrical device (100) according to claim 2, wherein said at least one operating parameter of the electric battery (120) is selected from the group consisting of: voltage, current, state of charge, and temperature.

4. The electrical device (100) according to claim 2 or 3, wherein the central electronic unit (155) is configured to acquire each value of each operating parameter with timing based on the real time counted by the electronic real-time clock circuit (145).

5. The electrical device (100) according to any one of claims 2 to 4, wherein the central electronic unit (155) is configured to acquire from the electronic real-time clock circuit (145) the real-time value at the instant of acquisition of each value of each operating parameter, and to store said real-time value in association with the corresponding operating-parameter value.

6. The electrical device (100) according to the preceding claim, wherein the central electronic unit (155) comprises or is connected to a non-volatile memory unit (160), the non-volatile memory unit (160) comprising a plurality of memory sectors, and wherein the central electronic unit (155) is configured to repeatedly acquire and store values of a plurality of operating parameters of the electric battery (120) and/or of said other electrical/electronic component of the electrical device (100), wherein said operating parameters are stored in each memory sector as an electronic image in which the values of the operating parameters acquired at the same instant of time determined by the electronic real-time clock circuit (145) are represented.

7. The electrical device (100) according to any one of claims 2 to 6, wherein the central electronic unit (155) is configured to keep in memory a plurality of values of each operating parameter, acquired at different times.

8. The electrical device (100) according to any one of claims 1 to 7, comprising at least one communication module (165) via which the central electronic unit (155) is connectable to a software application (175) running on an external electronic device (170).

9. The electrical device (100) according to the preceding claim and any one of claims 2 to 7, wherein the central electronic unit (155) is configured to transmit to the software application (175) the acquired and stored values of each operating parameter.

10. The electrical device (100) according to claim 8 or 9, wherein the central electronic unit (155) is configured to count, by means of the electronic real-time clock circuit (145), a period of time during which the central electronic unit (155) is disconnected from the software application (175), and to prevent operation of the electrical device (100) if said period of time exceeds a predetermined threshold value.

11. The electrical device (100) according to claim 8 or 9 or 10, wherein the central electronic unit (155) comprises, or is connected to, a non-volatile memory unit (160), the central electronic unit (155) being configured to: store in the non-volatile memory unit (160) the real time, acquired from the electronic real-time clock circuit (145), at which a disconnection of the central electronic unit (155) from the software application (175) occurs; and, upon each subsequent use or power-up of the electrical device (100), acquire from the electronic real-time clock circuit (145) the real time at that instant and compare it with the stored real time; and wherein the central electronic unit (155) is configured to block the electrical device (100) if a difference between the real time at said instant and the stored real time at which the disconnection occurred exceeds a predetermined threshold value.

12. The electrical device (100) according to any one of the preceding claims, wherein said electric battery (120) is removable.
